# EUROPEAN PATENT SPECIFICATION

(11) **EP 1 114 369 B1**
(45) Date of publication and mention of the grant of the patent: **16.10.2002**
(21) Application number: 99946637.8
(22) Date of filing: 26.08.1999
(51) Int. Cl.: G06F 9/445, G06F 9/44

(54) **METHOD AND COMPUTER PROGRAM PRODUCT TO DYNAMICALLY INTEGRATE ADD-ON TASKS WITH CORE SOFTWARE TASKS**
VERFAHREN UND PROGRAMMPRODUKT ZUR DYNAMISCHEN EINBETTUNG VON ZUSATZAUFGABEPROZESSEN MIT KERNAUFGABEPROZESSEN
PROCEDE ET PRODUIT DE PROGRAMMATION INFORMATIQUE POUR L'INTEGRATION DYNAMIQUE DE TACHES SUPPLEMENTAIRES A DES TACHES DU LOGICIEL DE BASE

(30) Priority: 16.09.1998 US 154266
(43) Date of publication of application: 11.07.2001
(73) Proprietor: INTEL CORPORATION, Santa Clara, CA 95052 (US)
(72) Inventor: KETRENOS, James P., Austin, TX 78738 (US); MARLER, Jerilyn, Beaverton, OR 97006 (US)
(74) Representative: Wombwell, Francis
(86) International application number: US9919407
(87) International publication number: WO00016195

(56) References cited:
- US-A- 5 434 963
- SOMMERVILLE I ET AL: "THE ECLIPSE USER INTERFACE" SOFTWARE PRACTICE & EXPERIENCE,GB,JOHN WILEY & SONS LTD. CHICHESTER, vol. 19, no. 4, 1 April 1989 (1989-04-01), pages 371-391, XP000007962 ISSN: 0038-0644

## Description

### Background

This invention relates generally to the use of add-on software which is plugged into existing software to provide additional functionalities.

In many software products, it is desirable to have add-ons or plug-ins which may be provided separately from core software. An add-on or plug-in may be necessary to provide certain functionalities which some users may want to incorporate and others may prefer not to include for cost or performance reasons. In addition, add-ons or plug-ins may be provided to augment the core software based on subsequent improvements. Add-ons or plug-ins may also be useful in making the software compatible with new operating systems.

In many cases, the add-on uses many of the same tasks as the core software. For example, many programs include a help function which provides information about how to deal with common problems. The core software may include its own help for all the originally included functionalities. This core software help task would not incorporate the help function for the various add-ons which may or may not have existed at the time the core software was released. Commonly, the add-on or plug-in software includes its own help function.

This lack of integration causes a number of problems in software that may, for example, use a task or a navigation bar. Commonly, task or navigation bars can be mouse clicked by the user to implement certain common tasks. For example, many navigation bars include a help button which, when "pressed" or mouse clicked, creates a drop-down menu of different help topics.

Thus, a problem arises with regard to getting to help that is included in the add-on directory but is not accessible through the navigation bar in the core software. Generally, access to the add-on help requires bringing up the add-on, finding its directory and clicking on the appropriate help topic under the add-on's directory.

An example of a prior art arrangement is disclosed in US 5,434,963 (KUWAMOTO HIDEKI et al).

Thus, there is a need for an improved way of integrating tasks performed by add-ons or plug-ins into tasks performed by core software.

### Summary

In accordance with one embodiment, a method for integrating add-on and core software includes providing software which identifies a first task in an add-on software and a second task in a core software. Software is provided which associates the directory name for the first task with the second task. Software is also provided that creates a link to the first task. The link is associated with the second task.

### Brief Description Of The Drawing

Figure 1 is a flow diagram for one embodiment of the present invention;
Figure 2 is a continuation of the flow diagram of Figure 1;
Figure 3a is a depiction of the help button of a navigation bar; and
Figure 3b is a schematic depiction of the relationship between the drop-down menu of the help button of a navigation bar of a core software program and the directory of an add-on software program.

### Detailed Description

Add-on software is commonly incorporated into an existing piece of software called core software in order to provide added functionalities, improvements and updates.
Conventionally, tasks in the core and add-on software with the same or similar functions have common (or at least similar) names. For example, both the core and the add-on software may include a number of topics for implementing a help task.

In order to incorporate help or other tasks which are common between the core and add-on software, a link can be provided between the core software task and the add-on task. For example, a drop-down menu for the task in the core software may link to a hard disk drive directory listing for an add-on software task.

As used herein, the term "software" may include programs, including applications, and script, for example. A task is simply a function provided by a software user interface. Common tasks, using Microsoft® Word® as an example, include File, Edit, View, Insert, Help, all listed in a Word® navigation bar and each having drop-down menus.

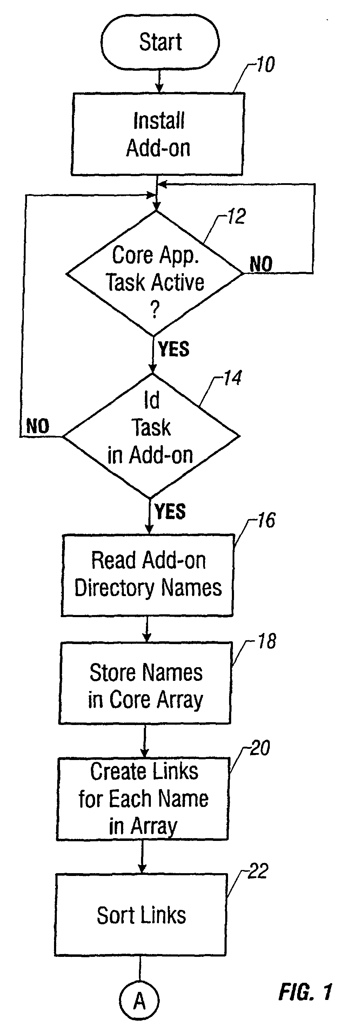

Referring to Figure 1, software for coordinating functions in core and add-on software begins with the installation of the add-on software, as indicated in block 10. Upon installation of the add-on software, the add-on software's tasks are incorporated into the hard disk drive directory under corresponding core tasks.

Thus, for example, all of the help tasks provided by the core and add-on software are listed under a help heading in the directory. The help tasks provided with the add-on software would conventionally be listed in the help subdirectory under the name of the add-on software.

Next, an inquiry is made at diamond 12 to determine whether the core software has a task which is active. A task is active, for example, when its entry in a drop-down menu has been selected by being mouse clicked. If not, the flow cycles, waiting for an active task.

If there is an active task, an inquiry is made at diamond 14 to determine whether the same (or at least a similar) task exists in the add-on software. This inquiry may be done by searching under the task name in the hard disk drive directory. The tasks implemented by the add-on software may be located under the common core application task directory name, for example under the name of the add-on software.

If there is a task under the add-on software name corresponding to the active task, the add-on software directory name for the task is read, as indicated in block 16. In other words, the directory names listed under the active task, situated under the add-on software name, are read from the directory. The add-on directory names with the same or similar names are then stored in association with a core software, as shown in block 18 in Figure 1. Typically, this means that the directory names for tasks in the add-on software are added to a drop-down menu associated with the corresponding task button in a navigation bar in the core software. Thus, the corresponding add-on tasks may be stored in association with a core software task, for example in a temporary memory array which includes the items in the task's drop menu.

Links are then created for each name in the array as indicated in block 20. For example, these links may cause the flow to move from a selected drop-down menu name associated with the core software over to a corresponding name in the hard disk drive directory. Returning now to Figure 1, after the links have been created, for example in Hypertext Markup Language (HTML) code, the links are sorted alphabetically as indicated in block 22.

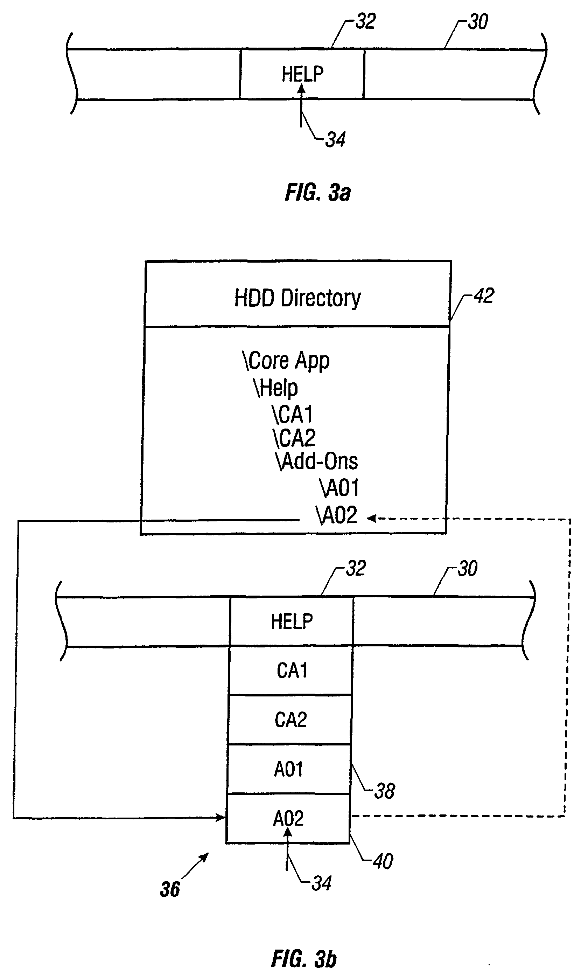

In Figure 3a, a navigation bar 30 is shown which has a help button 32 being actuated or clicked on as indicated at 34. When the help button is clicked on indicating that a core application task is active, a drop-down menu 36 visually extends below the help button 32 (Fig. 3b). The drop-down menu may include two core software help topics CA1 and CA2. The drop-down menu also shows two additional topics A01 and A02 that were provided with the add-on software.

The names A01 and A02 are read from the hard disk drive directory 42 and temporarily stored in association with the core software tasks, as indicated by the solid line extending from A02 in the directory 42 to A02 in the drop-down menu 36. As explained above, the help topics A01 and A02 are located by looking under the same or similar task name (i.e. "help" in Figure 3b) in the hard disk drive directory 42. By looking under the name of the add-on software (i.e. Add-Ons in Figure 3b), the add-on software help tasks or topics may be located.

When the user clicks on the drop-down menu item A02, for example, as indicated at 34 (in Fig. 3b), the flow returns to the hard disk drive directory 42 as indicated in dashed lines. This results in execution of the A02 add-on task.

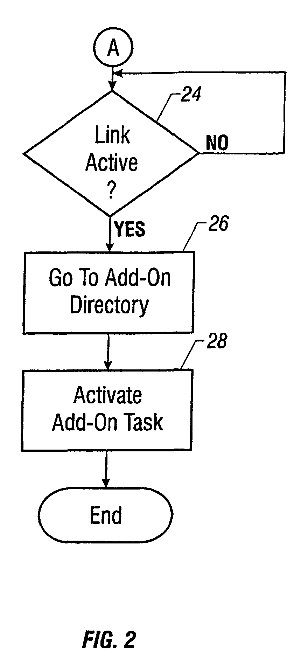

When the link is actuated, as indicated in Figure 2 at diamond 24, the flow transfers to the add-on hard disk drive directory, as indicated in block 26 of Figure 2 and as shown in dashed lines in Figure 3b. As a result, the add-on software task is initiated as indicated in block 28 in Figure 2.

Thus, help tasks in core software and an add-on software may be coordinated so that these tasks may be implemented seamlessly, as though the add-on task were always part of the core software. Moreover, if the add-on software or particular add-on software tasks are uninstalled, the uninstalled tasks are automatically removed from the directory. Therefore, the uninstalled tasks are not added to the task list (or the temporary memory array of tasks) in the core software when the corresponding task button is "pressed."

For example, the task drop-down menu in the core software may be dynamically recreated each time the task button 32 is actuated. This means that the task list is always up to date with the latest add-on software which has been installed and uninstalled.

## Claims

1. A method for coordinating the tasks in add-on and core software comprising:
identifying a first task in add-on software and a second task in core software (14);
associating an add-on software directory name for the first task with the second task (18); and
linking the directory name for the first task with the second task in core software (20).

2. The method of claim 1 including reading said directory name under an add-on software directory heading (16).

3. The method of claim 1 including storing said directory name when a link is created every time a core software task is activated.

4. The method of claim 1 including creating a plurality of links and sorting those links alphabetically (22).

5. The method of claim 1 including adding a directory name from the directory in the add-on software to a drop-down menu (36) in a core software navigation bar (30).

6. The method of claim 1 including automatically removing the association of the stored directory name when the add-on software is uninstalled.

7. The method of claim 1 wherein said directory name is help.

8. The method of claim 1 further comprising:
linking the directory name for the first task with the second task in core software in response to the actuation of the core software task; and
terminating the link after the link has been used to integrate an add-on software task with the core software task.

9. An article comprising a computer readable medium storing instructions for causing a computer to:
identify a first task in add-on software and a second task in core software (14);
associate a directory name for the first task with the second task (18); and
link the directory name for the first task with the second task (20).

10. The article of claim 9 including instructions for causing a computer to store a directory name when a link is created every time the second task is activated.

11. The article of claim 9 including instructions for causing a computer to read the directory names in the add-on directory (16).

12. The article of claim 9 including instructions for causing a computer to add the directory names from the directory in the add-on software to a drop-down menu (36) in a core software navigation bar (30).

13. The article of claim 9 including instructions for causing a computer to automatically remove the task when the add-on software is uninstalled.

14. The article of claim 9 wherein said first and second tasks are help tasks.

## Patentansprüche

1. Ein Verfahren zur Abstimmung der Tasks in Zusatz-Software und Kernsoftware, umfassend:
Identifizieren einer ersten Task in der Zusatz-Software und einer zweiten Task in der Kernsoftware (14);
Zuordnen eines Verzeichnisnamens der Zusatz-Software für die erste Task zu der zweiten Task (18); und
Verknüpfen des Verzeichnisnamens für die erste Task mit der zweiten Task in der Kernsoftware (20).

2. Das Verfahren gemäß Anspruch 1, einschließend das Lesen des Verzeichnisnamens unter einer Verzeichnisüberschrift der Zusatz-Software (16).

3. Das Verfahren gemäß Anspruch 1, einschließend ein Speichern des Verzeichnisnamens, wenn eine Verknüpfung erzeugt wird, immer dann, wenn ein Task der Kernsoftware aktiviert wird.

4. Das Verfahren gemäß Anspruch 1, einschließend das Erzeugen einer Vielzahl von Verknüpfungen und deren alphabetische Sortierung (22).

5. Das Verfahren gemäß Anspruch 1, einschließend das Hinzufügen eines Verzeichnisnamens aus dem Verzeichnis der Zusatz-Software zu einem Drop-Down-Menü (36) in der Navigationsleiste der Kernsoftware (30).

6. Das Verfahren gemäß Anspruch 1, einschließend das automatische Entfernen der Zuordnung des gespeicherten Verzeichnisnamens bei Deinstallation der Zusatz-Software.

7. Das Verfahren gemäß Anspruch 1, wobei der Verzeichnisname "Hilfe" lautet.

8. Das Verfahren gemäß Anspruch 1, außerdem umfassend:
Verknüpfen des Verzeichnisnamens für die erste Task mit der zweiten Task in der Kernsoftware bei Auslösung der Task der Kernsoftware; und
Beenden der Verknüpfung, nachdem die Verknüpfung benutzt wurde, um die Task der Zusatz-Software in die Task der Kernsoftware zu integrieren.

9. Ein Gegenstand, umfassend ein computerlesbares Medium mit gespeicherten Anweisungen, die einen Computer veranlassen:
eine erste Task in der Zusatzsoftware und eine zweite Task in der Kernsoftware zu identifizieren (14);
einen Verzeichnisnamen für die erste Task der zweiten Task zuzuordnen (18); und
den Verzeichnisnamen für die erste Task mit der zweiten Task zu verknüpfen (20).

10. Der Gegenstand nach Anspruch 9, einschließend Anweisungen, die einen Computer veranlassen, einen Verzeichnisnamen zu speichern, wenn eine Verknüpfung erzeugt ist, bei jeder Aktivierung des zweiten Tasks.

11. Der Gegenstand nach Anspruch 9, einschließend Anweisungen, die einen Computer veranlassen, die Verzeichnisnamen in dem Zusatz-Verzeichnis zu lesen (16).

12. Der Gegenstand nach Anspruch 9, einschließend Anweisungen, die einen Computer veranlassen, die Verzeichnisnamen aus dem Verzeichnis in der Zusatz-Software zu einem Drop-Down-Menü (36) in der Navigationsleiste der Kernsoftware (30) hinzuzufügen.

13. Der Gegenstand nach Anspruch 9, einschließend Anweisungen, die einen Computer veranlassen, die Task bei Deinstallation der Zusatz-Software automatisch zu entfernen.

14. Der Gegenstand nach Anspruch 9, wobei es sich bei der ersten und der zweiten Task um "Hilfe"-Tasks handelt.

## Revendications

1. Procédé de coordination des tâches dans un logiciel d'extension et de base, comprenant :
- l'identification d'une première tâche du logiciel d'extension et d'une seconde tâche du logiciel de base (14) ;
- l'association d'un nom de répertoire de logiciel d'extension pour la première tâche avec la seconde tâche (18) ; et
- la liaison du nom de répertoire pour la première tâche avec la seconde tâche dans le logiciel de base (20).

2. Procédé selon la revendication 1, comprenant la lecture dudit nom de répertoire sous une en-tête de répertoire de logiciel d'extension (16).

3. Procédé selon la revendication 1, comprenant le stockage dudit nom de répertoire lorsqu'une liaison est créée chaque fois qu'une tâche de logiciel de base est activée.

4. Procédé selon la revendication 1, comprenant la création d'une pluralité de liaisons et le tri alphabétique de ces liaisons (22).

5. Procédé selon la revendication 1, comprenant l'addition d'un nom de répertoire à partir du répertoire du logiciel d'extension à un menu déroulant (36) dans une barre de navigation de logiciel de base (30).

6. Procédé selon la revendication 1, comprenant l'enlèvement automatique de l'association du nom de répertoire stocké lorsque le logiciel d'extension est désinstallé.

7. Procédé selon la revendication 1, selon lequel ledit nom de répertoire est une aide.

8. Procédé selon la revendication 1, comprenant, de plus :
- la liaison du nom de répertoire pour la première tâche avec la seconde tâche du logiciel de base en réponse à l'activation de la tâche du logiciel de base ; et
- l'arrêt de la liaison après l'utilisation de la liaison pour intégrer une tâche de logiciel d'extension à la tâche de logiciel de base.

9. Objet comprenant un support lisible sur ordinateur stockant des instructions amenant un ordinateur à :
- identifier une première tâche d'un logiciel d'extension et une seconde tâche d'un logiciel de base (14) ;
- associer un nom de répertoire pour la première tâche à la seconde tâche (18) ; et
- lier le nom de répertoire pour la première tâche à la seconde tâche (20).

10. Objet selon la revendication 9, comprenant des instructions amenant un ordinateur à stocker un nom de répertoire lorsqu'une liaison est créée chaque fois que la seconde tâche est activée.

11. Objet selon la revendication 9, comprenant des instructions pour amener un ordinateur à lire les noms de répertoire dans le répertoire d'extension (16).

12. Objet selon la revendication 9, comprenant des instructions pour amener un ordinateur à ajouter les noms de répertoire à partir du répertoire du logiciel d'extension à un menu déroulant (36) d'une barre de navigation du logiciel de base (30).

13. Objet selon la revendication 9, comprenant des instructions pour amener un ordinateur à enlever de façon automatique la tâche lorsque le logiciel d'extension est désinstallé.

14. Objet selon la revendication 9, dans lequel lesdites première et seconde tâches sont des tâches d'aide.
